(19) Europäisches Patentamt
European Patent Office
Office européen des brevets

(11) **EP 3 508 899 A1**

(12) **EUROPEAN PATENT APPLICATION**

(43) Date of publication:
**10.07.2019 Bulletin 2019/28**

(51) Int Cl.:
*G02B 6/38* (2006.01)
*G02B 6/42* (2006.01)
*G02B 6/32* (2006.01)
*G02B 6/293* (2006.01)

(21) Application number: **18150460.6**

(22) Date of filing: **05.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(71) Applicant: **Koninklijke Philips N.V.**
**5656 AE Eindhoven (NL)**

(72) Inventors:
• **VAN DER MARK, Martinus Bernardus**
**5656 AE Eindhoven (NL)**
• **VAN PUTTEN, Eibert Gerjan**
**5656 AE Eindhoven (NL)**

• **DE LAAT, Antonius Wilhelmus Maria**
**5656 AE Eindhoven (NL)**
• **RADEMAKERS, Antonius Johannes Josephus**
**5656 AE Eindhoven (NL)**
• **VAN DER VLEUTEN, Cornelius Antonius Nicolaas Maria**
**5656 AE Eindhoven (NL)**
• **VAN RIJSWIJK, Ronald**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **METHOD OF MAKING AN OPTICAL CONNECTOR AND SUCH OPTICAL CONNECTOR**

(57)   The present invention relates to a method of making an optical connector, comprising: providing a fiber ferrule (16) having a longitudinal axis (18), and an optical fiber (20), wherein the optical fiber (20) has an optical fiber end (24); providing a graded index (GRIN) lens (28) having a first end facet (34); providing a lens holder (30); inserting the GRIN lens (28) into the lens holder (30); inserting the optical fiber into the fiber ferrule, putting the lens holder (30) and the fiber ferrule (16) together and adjusting at least one of a position and an orientation of the lens holder (30) and the fiber ferrule (16) with respect to one another, while the first end facet (34) of the GRIN lens (28) is in optical communication with the optical fiber end (24), under feedback control using a light beam (42) propagating through the optical fiber (20) and the GRIN lens (28) and directed into an optical detection system (44), such that the light beam (42) exiting the GRIN lens (28) is aligned with a longitudinal symmetry axis (OA) of the optical connector (10); and joining the lens holder (30) to the fiber ferrule (16).

FIG.4

Printed by Jouve, 75001 PARIS (FR)

**Description**

FIELD OF THE INVENTION

The present invention relates to optical connectors for reversibly connecting associated optical fibers. The present invention particularly relates to a method of making such optical connectors. The invention finds applications in interventional medical devices and interventional treatment procedures, in particular in optical interrogation techniques in minimally invasive medical interventions.

BACKGROUND OF THE INVENTION

In minimally invasive medical interventions, guidewires are used for advancing catheters to a target region (e.g., a guidewire for advancing a catheter to a heart during a minimally invasive cardiovascular intervention). These procedures are generally guided with, for example, real-time X-ray imaging, which depicts two dimensional projection images of the catheters and guidewires. However, challenges with X-ray imaging include the 2D nature of the imaging and the ionizing radiation to the patient and physician as well as the contrast agent that is toxic to the patient's kidneys. A more viable alternative is using optical shape sensing technology, which may provide full three-dimensional shape information of medical devices without the need for any harmful radiation. One way to implement spatially sensitive bend and twist sensing using optical fibers is to combine multiple cores having fiber-Bragg gratings along their length. One potential set-up may be three or more fiber cores oriented in a helical structure along the longitudinal fiber axis including an additional straight fiber core in the helix center.

Specifically, optical shape sensing guidewires are used in minimally invasive procedures, which have optical connectors for facilitating a backloading of catheters over a proximal end of the guidewires. The guidewire may be advanced to a target region of the intervention prior to the introduction of the diagnostic or therapeutic catheter. The guidewire is typically a thin wire that allows loading of the catheter over a proximal end of the guidewire and an advancement of the catheter over the guidewire to reach the target region.

In the cases where guidewires are needed to reach the target region prior to advancing the catheter, it would be desirable to use the shape sensing capabilities during the guidewire advancing phase prior to the backloading of the catheter. However, in order to use the guidewire with the shape sensing capability, it needs to be connected to an optical system via an optical connector at the point where the backloading would normally occur. In order to allow backloading, optical connectors for guidewires are required that are small enough to allow standard catheters to be backloaded onto the guidewire prior to reestablishing the optical connection for continued shape sensing of the guidewire.

For backloadable guidewires, optical connectors have been proposed which comprise one or more graded index (GRIN) lenses, as, for example, described in WO 2016/193051 A1. GRIN lenses are a promising choice as an optical component in optical connectors because of their compactness and their intrinsically low surface reflection. In a conventional lens, the combination of the curved surfaces at any point on the surface and refractive index of the lens material cause the light to refract in a desired direction at the given point. The refractive index difference, usually between the glass material of the lens and the surrounding air, is essential to the working of a conventional lens, but as a disadvantage, it also causes some of the incident light to be reflected. In a GRIN lens, contrary to a conventional lens, the light beam is bent due to a refractive index profile of the lens, which varies in the radial direction. The working of the GRIN lens is hence not crucially dependent on the refractive index difference between lens material and any adjacent material along the optical path at input or output of the GRIN lens. This property is used to eliminate all reflections in the optical path by avoiding any air to glass transitions when the connection between two optical connectors is established. Low reflection is achieved when the refractive index is closely matched at any point along the optical path. For measuring and calculating the shape of the optical fiber some recognizable reflection is however required to be able to align the relative starting positions of all of the fiber cores of the optical fiber to the micron level.

One characteristic of GRIN lenses is the so-called pitch. A light beam entering the GRIN lens is continuously refracted due to the refractive index profile in the radial direction of the GRIN lens, and the optical field inside the GRIN lens is therefore periodically changing along the light propagation axis with a period length. The pitch of the GRIN lens is defined as the geometrical length of the GRIN lens divided by the period length. For example, if the pitch is 1/4, or 3/4, or 5/4 etc., a set of collimated beams may exit the GRIN lens at the output end facet, when light beams enter the GRIN lens from the fiber cores of the optical fiber at the input end facet, and vice versa. When a GRIN lens shall have a predetermined pitch, then the geometric length of the GRIN lens is fixed based on the refractive index in the axial center of the GRIN lens and the numerical aperture of the GRIN lens.

It is to be understood that the terms "output" end facet and "input" end facet as used herein are exchangeable depending on the direction of light propagation.

Conventionally, when making an optical connector having a GRIN lens, which typically may have the shape of a rod lens, the GRIN lens is fusion spliced to the optical fiber. Reflection of light at the splice is very low in case the refractive index of the optical fiber and of the GRIN lens are closely matched.

Fusion splicing is a process in which the optical fiber and the GRIN lens are joined end-to-end using heat. In other words, the optical fiber and the GRIN lens are fused together in that the material of the optical fiber and the GRIN lens is locally melted similar to a welding process.

Conventional fusion splicing is challenging when making an optical connector. The lens must be of a precise length on the one hand, and must be held accurately in place within a high-temperature environment on the other hand. Therefore, when making the optical connector with a fusion splicing process in a conventional manner, the GRIN lens is provided with an excess length, and after the fusion splicing of the GRIN lens with the optical fiber, the GRIN lens is polished to the exact length. It comes out that in the production of a plurality of optical connectors, each GRIN lens has to be polished individually to the exact length after the fusion splicing process. The polishing process is hard to automate and the fusion splicing process wastes a lot of costly GRIN lens material. Taken together, the outlined process is not suitable for a mass production of optical connectors.

A further challenge in fusion splicing an optical fiber with a GRIN lens is to achieve the correct orientation and position of the GRIN lens with respect to the optical fiber. A light beam exiting the optical fiber and entering the GRIN lens should exit the GRIN lens at the output end facet in alignment with an optical axis of the connector, i.e. the longitudinal symmetry or center axis of the optical connector. For example, in case of a 1/4 pitch GRIN lens, a light beam from a central fiber core of the optical fiber entering the GRIN lens should exit the GRIN lens as a collimated beam that is as parallel as possible to the optical axis. Any misorientation between the GRIN lens and the optical fiber can cause deviations of the exiting light beam from alignment with the optical axis. Since the optical connector is in use connected to a counter connector, misoriented light exiting the optical connector does not properly enter the counter connector so that an optical shape sensing signal is not properly transferred from the optical connector to the counter optical connector and vice versa.

SUMMARY OF THE INVENTION

It is an object of the present invention to provide a method for making an optical connector and to provide an optical connector which are suitable for a cost-effective production of many optical connectors, and which at the same time are suitable for achieving the tight tolerances of the optical connector with respect to its optical characteristics.

In a first aspect of the invention, a method of making an optical connector is provided, comprising:

> providing a fiber ferrule having a longitudinal axis, and an optical fiber having an optical fiber end,
> providing a graded index (GRIN) lens having a first end facet,
> providing a lens holder,
> inserting the GRIN lens into the lens holder,
> inserting the optical fiber into the ferrule,
> putting the lens holder and the fiber ferrule together and
> adjusting at least one of a position and an orientation of the lens holder and the fiber ferrule with respect to one another, while the first end facet of the GRIN lens is in optical communication with the optical fiber end, under feedback control using a light beam propagating through the optical fiber and the GRIN lens and directed into an optical detection system, such that the light beam exiting the GRIN lens is aligned with a longitudinal symmetry axis of the optical connector,
> joining the lens holder to the fiber ferrule.

It is to be understood that the steps of the method according to the invention have not to be performed in the order indicated before.

In a first embodiment of the method according to the invention, the GRIN lens can be provided with the final predetermined geometrical length and, thus, pitch before joining the optical fiber and the GRIN lens. In particular, many GRIN lenses can be pre-produced in one batch and cut or machined, in particular polished to the desired geometrical length and, accordingly to the desired pitch. In the method according to the invention, the GRIN lens is inserted into a lens holder, and the lens holder and the fiber ferrule containing the optical fiber are put together such that the GRIN lens and the optical fiber are arranged end-to-end in optical communication with one another, before the GRIN lens and the optical fiber are joined to one another.

In a second embodiment of the method according to the invention, the GRIN lens has a long length and is fusion spliced to the optical fiber. After splicing, the GRIN lens is cut to length, wherein a fiber cleaver may be used for cutting. In particular, the GRIN lens rod blank may be very long, and many successive lenses may be spliced and cut or cleaved from the long GRIN lens rod, each successive cut or cleave forming a surface ready to be fusion spliced to the next optical fiber in the process. In this embodiment, after the cleaving process, the GRIN lens is inserted into the lens holder, and the lens holder with GRIN lens and the optical fiber already joined to the latter are placed in the end of the fiber ferrule, which now contains both the optical fiber and lens holder with GRIN lens. It is to be noted that no GRIN lens material goes to waste in this method although using fusion splicing.

Thus, the method according to the invention can be carried out in alternative ways: The optical fiber and the GRIN lens may be joined, in particular fusion-spliced, before insertion of the optical fiber into the fiber ferrule and inserting the GRIN lens into the holder, or the optical fiber is inserted into the fiber ferrule and the GRIN lens is inserted into the lens holder in a stage, where the optical fiber and the GRIN lens are not joined to one another. In the latter case, joining of the optical fiber and the GRIN lens may be performed, for example, when the lens holder is joined to the fiber ferrule using a joining substance.

In both afore-mentioned embodiments, the method according to the invention further provides an adjustment in which the lens holder and the fiber ferrule are positioned and/or oriented with respect to one another in order to obtain a proper alignment of these parts with respect to one another so that in the final optical connector, a light beam entering the optical connector exits the optical connector in the correct direction, aligned with the optical axis. This is accomplished according to the invention by using a feedback control when adjusting the lens holder and the fiber ferrule with respect to one another. The feedback control uses a light beam propagating through the optical fiber and the GRIN lens, and an optical detection system that receives the light beam exiting the GRIN lens. The optical detection system may provide an optical axis that is used for the adjustment step, wherein this optical axis is aligned with the longitudinal symmetry axis or optical axis of the optical connector. The position and/or orientation of the lens holder relative to the fiber ferrule may be adjusted until the light beam exiting the GRIN lens is aligned with the optical axis of the optical detection system. It is to be understood that the longitudinal symmetry axis of the connector may be coincident with the longitudinal center axis of the fiber ferrule, and/or with the longitudinal center axis of the optical fiber.

Adjusting the position and/or orientation of the lens holder and the fiber ferrule with respect to one another may include adjusting the position and/or orientation of the lens holder only, of the fiber ferrule only, or adjusting both of them. Adjusting the position may include displacing of the lens holder and/or the fiber ferrule relative to one another in direction transverse to the longitudinal axis and/or parallel to the longitudinal axis. Adjusting the orientation may include tilting the lens holder and/or the fiber ferrule relative to one another about a tilt axis or a tilt point.

The GRIN lens may be joint to the lens holder and the lens holder to the fiber ferrule using a joining substance like an adhesive. Alternatively, the GRIN lens may be clamped by the lens holder. For example, the lens holder may be shrunk over the GRIN lens to form a tube, which may extend to the outside of the GRIN lens and the fiber ferrule, when the lens holder with GRIN lens is inserted in the fiber ferrule. The excessive length can then be cut off.

As will be described later, the adjustment step and the joining step can be performed in a time overlapping manner, for example using a joining substance that may be applied prior to the adjustment and that cures or may be cured after the adjustment has been performed. It is also possible to first perform the adjustment step and to perform the joining step, for example by applying the joining substance in a subsequent step.

The method according to an invention is suitable in a mass production of optical connectors, is cost-effective and does not waste material of the GRIN lenses.

The optical detection system may be as simple as a target like a screen or detector capturing the light beam exiting the GRIN lens in a distance from the GRIN lens. The optical detection system may also comprise a camera, quadrant detector or other combinations of optics and photodetectors. The optical detection system may include an interferometer, such as a Michelson, Mach-Zehnder or shearing interferometer to detect beam defocus and tilt. Preferably, the interferometer should be operating at a wavelength within the range at which the optical fiber shows single mode behavior. In case of a multi-core optical fiber, the captured light beam can be the light beam emitted from a central fiber core of the optical fiber. In case of a 1/4, 3/4, 5/4, GRIN lens, the light beam captured by the detection system may be a collimated beam.

The optical axis of the optical detection system to which the light beam exiting the GRIN lens should be aligned by the adjusting procedure may be the longitudinal center or symmetry axis of the connector as a whole or of a part of it.

After adjusting the lens holder and the fiber ferrule with respect to one another, an improper orientation of the output end facet of the GRIN lens may occur. Since in use of the final optical connector it may be pushed against a counter connector with an elastic index-matching foil there between, some non-parallelism between the two facing end surfaces of the two optical connectors is acceptable and will be compensated by deformation of the foil. If however, in use of the final optical connector, it may be pushed against a counter connector without an elastic index-matching foil there between, it may be advantageous to avoid any non-parallelism between the two facing end surfaces of the two optical connectors. The reason is that any angle between the two facing end surfaces of the optical connectors can lead to lens-to-air refraction, which is undesired. There are several possibilities to address this problem, depending on whether the optical fiber and the GRIN lens are joined, for example by gluing, after the fiber ferrule with the optical fiber and the lens holder with the GRIN lens have been put together (first embodiment), or whether the optical fiber and the GRIN lens are joined, for example by fusion-splicing, beforehand (second embodiment).

In the first embodiment, the method may further comprise adjusting a second end facet of the GRIN lens opposite the first end facet to be at right angles to the longitudinal symmetry axis.

Preferably, this may be done before or during the adjustment of the lens holder and the fiber ferrule as described above.

The adjustment of the second end facet may be performed with feedback control using an interferometer as will be described herein.

The adjustment of the output end facet of the GRIN lens may also include an adjustment of the fiber ferrule, e.g. to be parallel to the longitudinal symmetry axis of the connector.

The wavelength used for the interferometric measurement may be different from the wavelength of the light beam used for the adjustment of the lens holder and the fiber ferrule with respect to one another. The wavelength used for the interferometer may be a short visible wavelength, leading to higher fringe count and hence better phase detection, or at least one that can be detected by a standard video camera or silicon quadrant detector.

Further, in the first embodiment adjusting the second or output end facet of the GRIN lens may comprise adjusting an orientation of the GRIN lens relative to the lens holder and/or an orientation of the lens holder and the fiber ferrule with respect to one another.

In the second embodiment, in which the optical fiber and the GRIN lens are joined to one another, for example by fusion-splicing, before adjusting the position and/or orientation of the lens holder and the fiber ferrule with respect to one another, an improper orientation of the output end facet of the GRIN lens relative to the optical axis cannot be addressed by a re-orientation of the lens holder after the position/orientation adjustment of the lens holder and the GRIN lens, because this would set aside the adjusted proper tilt angle of the GRIN lens which is necessary for correcting for all beam deflection errors. What can be done in the second embodiment is to measure the tilt angle of the output end facet of the GRIN lens and to orient the GRIN lens in the adjustment procedure at such an angle that when the refractive index of the GRIN lens would be matched with the refractive index of the output medium, i.e. the medium into which the light beam enters when exiting the GRIN lens, beam deflection is zero. In other words, the tilt angle of the output facet of the GRIN lens can be mathematically compensated for. Another possibility is bringing into close contact an index-matching element onto the second end facet, the index-matching element comprising, for example, a gel, an elastic foil, or a liquid and an index matching window situated further along the optical axis and being in close optical contact to the gel, foil or liquid, in order to exclude refraction at the inclined output end facet of the GRIN lens. After the position and/or orientation of the lens holder and the fiber ferrule are properly adjusted with respect to one another to exclude any beam deflection error, the index-matching material and the index-matching window may be removed from the GRIN lens and the proximal end of the lens holder may then be finished to provide a smooth connector end.

It is also possible to put a thin layer of refractive-index matching material on the second end facet of the GRIN lens and polish it to be at right angles to the optical axis, in particular to the longitudinal axis of the optical connector. This step may be useful to make sure that the lens holder and the GRIN lens have a common flush and smooth end surface.

In a further alternative, it is possible to use an index-matching, elastic foil on a glass window, the glass being at right angles to the optical axis. The GRIN lens including the lens holder would then be pressed against the foil to eliminate refraction.

As mentioned above, adjusting a position and/or an orientation of the lens holder and the fiber ferrule relative to one another may be performed during joining the GRIN lens to the lens holder (in the first embodiment) and/or the lens holder to the fiber ferrule (in the first and second embodiments).

For example, in the first embodiment, the lens holder may be filled with a slight excess of joining material, for example an index-matching adhesive, before insertion of the GRIN lens into the lens holder. In this configuration, and when the lens holder including the GRIN lens is put together with respect to the fiber ferrule and the GRIN lens is in optical communication with the optical fiber end, the adjustment procedure can be carried out. In the second embodiment, the fiber ferrule may be filled with a slight excess of joining material, for example an index-matching adhesive, before insertion of the lens holder with the GRIN lens and the optical fiber into the fiber ferrule. Subsequently, the joining substance cures or is cured, depending on the type of adhesive used.

The joining substance may be one or a combination of a two-component adhesive, a dual curable adhesive, an index-matching gel, a hot-melt adhesive, thermoplastic material. The adhesive may be refractive index matched as well.

A dual curable adhesive may be an adhesive, which may be cured under exposure of two different sources of energy, for example light, in particular ultraviolet (UV), light on the one hand, and heat on the other hand.

Alternatively or in addition to an adhesive, an index-matching gel can be used in the joining process in case the optical fiber and the GRIN lens are not fusion spliced to one another. The index matching gel may be applied to the interface between the optical fiber end and the first end facet of the GRIN lens while the bonding of the GRIN lens to the lens holder and the lens holder to the fiber ferrule may be accomplished by an adhesive. The advantage is that strength, wetting and bonding properties of the adhesive, necessary to hold the GRIN lens and the lens holder in place, are decoupled from the transparency and refractive index-matching properties of the gel, which in turn does not need to have strength.

The lens holder and/or the fiber ferrule may have one or more through holes in its wall that may be advantageously used for filling in a joining substance.

As mentioned above, the joining substance may be filled into the lens holder and/or the fiber ferrule before the adjustment step for adjusting the lens holder and the fiber ferrule with respect to one another, or the joining substance may be filled into the lens holder and/or fiber ferrule after this adjustment procedure. In the latter case, it is advantageous if the lens holder and/or fiber ferrule has lateral openings for filling in the joining substance.

A further refinement of the first embodiment provides that a distance between the optical fiber end and the first end facet of the GRIN lens that faces the optical fiber end is adjusted.

It is one further advantage of the method according to the invention, that the focus and the magnification may be corrected by this measure, if the optical fiber and the GRIN lens are not fusion-spliced with one another. In case of a one-quarter pitch length GRIN lens, the GRIN lens images the optical fiber end onto the output end facet. The size of the image of the optical fiber end at the output end facet is the magnification which usually is >1. Although it is best when the GRIN lenses are made exactly to length, small adjustments may be made afterwards if the length is slightly too short. The focus can be adjusted at the cost of magnification, or vice versa. In any case, small adjustments can be made by gluing fiber and lens not flushed together but with a small, e.g. a few microns space for final adjustment of focus or magnification.

In a second aspect of the invention, an optical connector is provided, comprising:

a fiber part having a fiber ferrule having a longitudinal axis, and an optical fiber placed inside the fiber ferrule and extending along the longitudinal axis, wherein the optical fiber has an optical fiber end,
a lens part having a lens holder and a graded index (GRIN) lens placed inside the holder,
the lens holder being connected to the fiber ferrule, wherein the GRIN lens is in optical communication with the optical fiber end, wherein the GRIN lens is joined to the lens holder, and the lens holder is joined to the fiber ferrule with a joining substance,
wherein at least one of a position and orientation of the lens holder and the fiber ferrule is adapted such that a light beam propagating from the optical fiber end through the GRIN lens is aligned with a longitudinal symmetry axis of the connector at an output end facet of the GRIN lens when exiting from the GRIN lens.

It shall be understood that the claimed optical connector has similar and/or identical preferred embodiments as the method and as defined in the dependent claims.

The optical connector according to the invention when connected to a counter connector, possibly by using an intermediate optical element such as a foil, may form an optical connection of sufficient quality.

The GRIN lens may be fixed to the lens holder by clamping or by a joining substance. The lens holder may be a shrink tube shrunk on the GRIN lens.

Preferably, the optical fiber has a plurality of fiber cores with the central fiber core extending along the longitudinal center axis of the connector.

Further, the optical fiber end may be convexly curved with an apex arranged in the center of the optical fiber end.

Such a design of the optical fiber end has the advantage of meeting the UPC standard (optical fiber Ultra-Polished Connector). The curved surface may be slightly spherical with the apex at the center of the optical fiber end which makes that the contact point between the GRIN lens and the optical fiber is close to the center of both the GRIN lens and the optical fiber and not close to an edge of the GRIN lens, even not when the GRIN lens is slightly tilted.

The GRIN lens may have a pitch of k/4, wherein k is an odd positive integer.

This design of a GRIN lens is advantageous in optical connectors for backloadable interventional devices like a guidewire.

BRIEF DESCRIPTION OF THE DRAWINGS

These and other aspects of the invention will be apparent from and elucidated with reference to the embodiments described hereinafter. In the following drawings:

Fig. 1 shows two GRIN lenses spliced to multi-core optical fibers;
Fig. 2a), b) and c) show three GRIN lenses with different pitches;
Fig. 3a) to e) show sketches for explaining a number of possible causes of beam deflection at a GRIN lens output end facet for a quarter-pitch lens;
Fig. 4a) and b) show an embodiment of an optical connector according to the present invention, wherein Fig. 4a) shows a fiber part and a lens part before being joined to one another, and Fig. 4b) shows the final optical connector;
Fig. 5a), b) and c) show an adjustment of a fiber part and a lens part with respect to one another in a method for making an optical connector according to the invention;
Fig. 6 shows an adjustment of an output end facet of the GRIN lens in the method of making an optical connector according to the invention;
Fig. 7 shows a further embodiment of a method of making an optical connector according to the invention;
Fig. 8 shows a further embodiment of a method of making an optical connector according to the invention; and
Fig. 9 shows a further embodiment of a method of making an optical connector according to the invention;
Fig. 10 shows an embodiment of an optical connector according to the invention, where the optical fiber and GRIN lens are fusion spliced together; and
Fig. 11 shows a preliminary stage of the optical connector in Fig. 10 in a method of making the optical connector.

DETAILED DESCRIPTION OF THE INVENTION

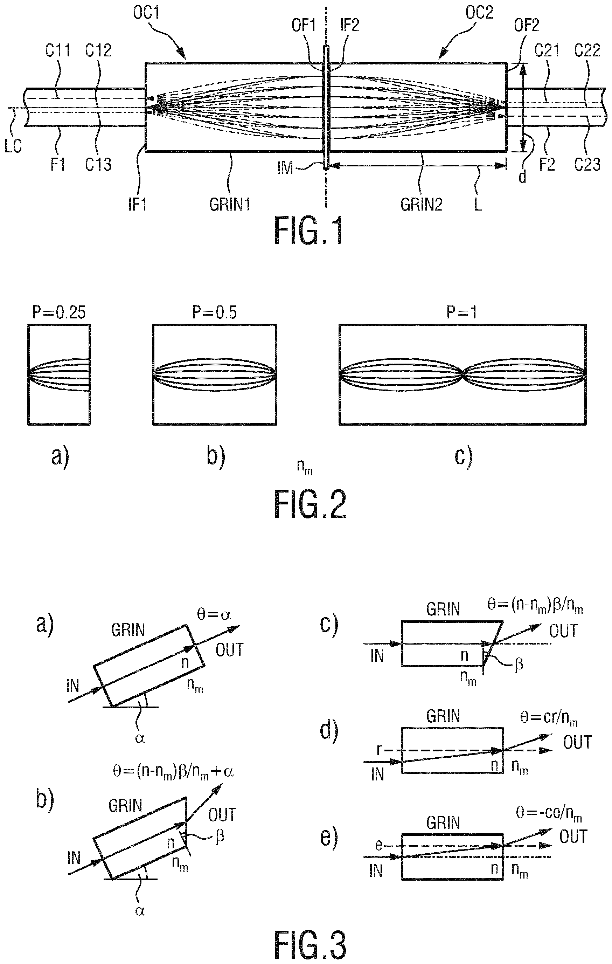

First, a general explanation of graded index (GRIN) lenses and optical connectors having GRIN lenses will be given with reference to Figs. 1 and 2a)-c). Generally, optical connectors having one or more GRIN lenses are suitable for use with medical interventional devices with optical shape sensing capability.

Fig. 1 shows an optical connector OC1 and a counter optical connector OC2. The optical connector OC1 comprises an optical fiber F1 and a GRIN lens GRIN1. The optical fiber F1 may extend through a guidewire in order to sense the optical shape of the guidewire in an interventional procedure. The optical fiber F1 may be a multi-core fiber having fiber cores C11, C12, C13 or more fiber cores, wherein the fiber core C12 is the central core with respect to the longitudinal center axis LC of the fiber F1.

Fig. 1 shows a typical case of a 1/4 pitch GRIN lens GRIN1. The pitch will be explained later in more detail.

Light beams from each of the fiber cores C11, C12, C13 enter the GRIN lens GRIN1 at an input end facet IF of the GRIN lens GRIN1, and exit the GRIN lens GRIN1 at an output end facet OF of the GRIN lens GRIN1 as collimated light beams. The collimation effect of the GRIN lens GRIN1 is due to the pitch of 1/4 of the GRIN lens GRIN1. The collimated light beams then enter the optical connector OC2 having a GRIN lens GRIN2 and an optical fiber F2 which may be connected, for example, to an optical interrogator console used in optical shape sensing procedures. The light beams exit the GRIN lens GRIN2, which in turn is 1/4 pitch GRIN lens, at an output end facet OF2 as focused light beams which then enter fiber cores C21, C22 and C23 of the optical fiber F2. In Fig. 1, the whole arrangement of GRIN lens GRIN1 and GRIN lens GRIN2 has a pitch of 1/2. In view of the configuration of the GRIN lenses GRIN 1 and GRIN2 as quarter pitch lenses in each case, a set of collimated beams may enter and exit the connectors OC1 and OC2 to and from the focal point at the fiber cores C11, C12, C13 or C21, C22, C23 of the fibers F1, F2, and vice versa. It is to be noted that a light beam coming from fiber core C11 enters fiber core C23 after having propagated through the GRIN lenses GRIN1 and GRIN2, i.e. the image of the fiber cores C11, C12, C13 is inverted at the fiber cores C21, C22, C23.

GRIN lenses are a good choice in backloadable versions of optical shape sensing technologies in medical interventional devices because of their compactness and their intrinsically low surface reflections. For, the light is not reflected or refracted at an air-glass transition but bent in a graded index profile extending, for example, in the radial direction of the GRIN lens. This property is used to eliminate all air to glass transitions when the connection is established, e.g. when the optical fiber and GRIN lens are fusion spliced, glued or otherwise index-matched and pushed together. The reflection should be made low because otherwise it will overwhelm the relatively weak reflection signals coming from each point along the rest of the optical fiber F1. Between the connectors OC1 and OC2, a thin, index-matching foil IM may be arranged to reduce or eliminate reflection at the output end facet OF1 and the input end facet IF2.

Fig. 1 shows a typical length L of a GRIN lens of e.g. 1.3 mm and a typical diameter d of e.g. 0.3 mm. With respect to Fig. 2a)-c) the physical principles of GRIN lenses will be explained in more detail.

A GRIN lens or in general GRIN optical components have a gradual position dependent variation in the refractive index that is used to control the light propagation through the respective component. An important subset of GRIN optics consists of cylinders, also called GRIN rod lenses, with a refractive index that is changing only along the radial distance r. For example, GRIN rod lenses have a radial refractive index profile that is almost parabolic:

$$n(r) = n_0 \operatorname{sech}(gr) \approx n_o \left(1 - \frac{g^2 r^2}{2}\right), \qquad (1)$$

where g is the gradient constant, no is the refractive index in the center of the GRIN rod lens, and r is the radial position with respect to the longitudinal center axis of the GRIN rod lens. Light entering the GRIN rod lens is continuously refracted, and the optical field inside such a GRIN rod lens is therefore periodically changing along the z-axis (cylinder axis), with a period length of

$$z_{\text{period}} = \frac{2\pi}{g}. \qquad (2)$$

A common way to denote the length of a GRIN rod lens is in terms of the pitch P, which is the geometrical length L of the GRIN rod lens divided by the period length $Z_{period}$:

$$P = \frac{L}{z_{period}} = \frac{Lg}{2\pi}.$$ (3)

Fig. 2a) shows a GRIN rod lens with a pitch P = 0.25, Fig. 2b) shows a GRIN rod lens with a pitch P = 0.5, and Fig. 2c) shows a GRIN rod lens with a pitch P = 1 in some examples.

A GRIN rod lens which has a pitch of P = 1, 2, 3, 4, ..., images its front plane onto its back plane and vice versa. GRIN rod lenses with a pitch of P = 0.5, 1.5, 2.5, ..., also image the front plane onto the back plane, but the image is now inverted, as it is the case with the GRIN lens arrangement in Fig. 1 formed by the GRIN lenses GRIN1 and GRIN 2. Another typically used pitch is P = 1/4, 3/4, 5/4, ..., for which the GRIN rod lens collimates the light from every point on its front plane at its back plane, and vice versa.

The numerical aperture of a GRIN rod lens is defined by the refractive index at the center of the GRIN rod lens and the refractive index at the outer boundary of the GRIN rod lens:

$$NA = n_0 \sqrt{1 - \operatorname{sech}^2\left(\frac{gd}{2}\right)},$$ (4)

where d is the diameter of the GRIN rod lens perpendicular to the cylinder axis (see Fig. 1).

When the minimum required NA and the maximum diameter d is known, a GRIN rod lens may be designed with a gradient constant g according the needs of the application:

$$g = \frac{2}{d}\operatorname{sech}^{-1}\left(\sqrt{1 - \left(\frac{NA}{n_0}\right)^2}\right).$$ (5)

When furthermore the required pitch P is known, the GRIN rod lens must have a length L as follows:

$$L = \frac{d\pi P}{\operatorname{sech}^{-1}\left(\sqrt{1 - \left(\frac{NA}{n_0}\right)^2}\right)}.$$ (6)

Conventionally, when making an optical connector like the optical connector OC1 in Fig. 1, the fiber F1 and GRIN lens GRIN1 are joined to one another by a fusion splicing process. Due to the fusion splicing process in which the optical fiber F1 and the GRIN lens GRIN1 are melted at their facing ends, the geometrical length L of the GRIN lens GRIN1 may change. When making an optical connector based on fusion splicing of the optical fiber with the GRIN lens, it was thus necessary to post-process a GRIN lens after the fusion splicing process. Such post-processing conventionally consists in polishing the GRIN lens to the exact length after the fusion splicing process.

Further, it is difficult to control the proper position and orientation of the optical fiber and the GRIN lens with respect to one another. This holds regardless whether a fusion splicing process or a gluing process is used to join the optical fiber and GRIN lens together. Fig. 3a) to e) show examples of a number of alignment errors that may occur when making an optical connector like the optical connector OC1 in Fig. 1.

In Figs. 3a) to e), an arrow IN illustrates a central ray of incoming light through an optical fiber (not shown) entering a GRIN lens GRIN, and an arrow OUT illustrates the light ray exiting the GRIN lens GRIN.

Fig. 3a) shows the case of a misalignment of the GRIN lens itself because of an undesired tilt of the GRIN lens in the optical connector. Fig. 3b) shows the case like in Fig. 3a) with an additional deflection of the light ray caused by a subsequent straight polishing of the output end facet of the GRIN lens to be perpendicular to the optical axis (in which case the angle α equals the angle β). Fig. 3c) shows the case of a GRIN lens which is oriented correctly, but its output end facet has obtained an inclination after the polishing step in undesired manner. Fig. 3d) shows the case that the optical fiber is fusion spliced to the GRIN lens somewhat displaced with respect to the center axis of the GRIN lens. Fig. 3e) shows the case of an eccentric placement of the GRIN lens or an eccentric optical axis of the GRIN lens.

In Fig. 3, θ denotes the beam deflection angle with respect to an optical axis OA, r denotes the radial offset of the incoming light ray, e the eccentricity of the optical axis of the GRIN lens, n the refractive index of the GRIN lens, $n_m$ the refractive index of the output medium and c denotes a deflection parameter for a typical GRIN lens. A typical value is c = 2 rad/mm. A typical allowable beam deflection angle θ should be less than 1 mrad. Any small deflection angle (this holds for both the x- and γ-plane) is described by

$$\theta = c(r - e)/n_m + (n - n_m)\,\beta/n_m + \alpha \qquad (7)$$

All angular beam deviations θ can be compensated by adjusting the lens tilt angle α.

Further deteriorations of the optical properties of an optical connector may be a distortion of the light beam due to a fusion splice of an angled cleave and the deviation of the GRIN lens away from being coaxial with the optical axis. Typically, the maximum allowed deviation may be 20 micrometer.

The present invention provides a method and a design of an optical connector which eliminates the above disadvantages and will be described hereinafter with reference to exemplary embodiments.

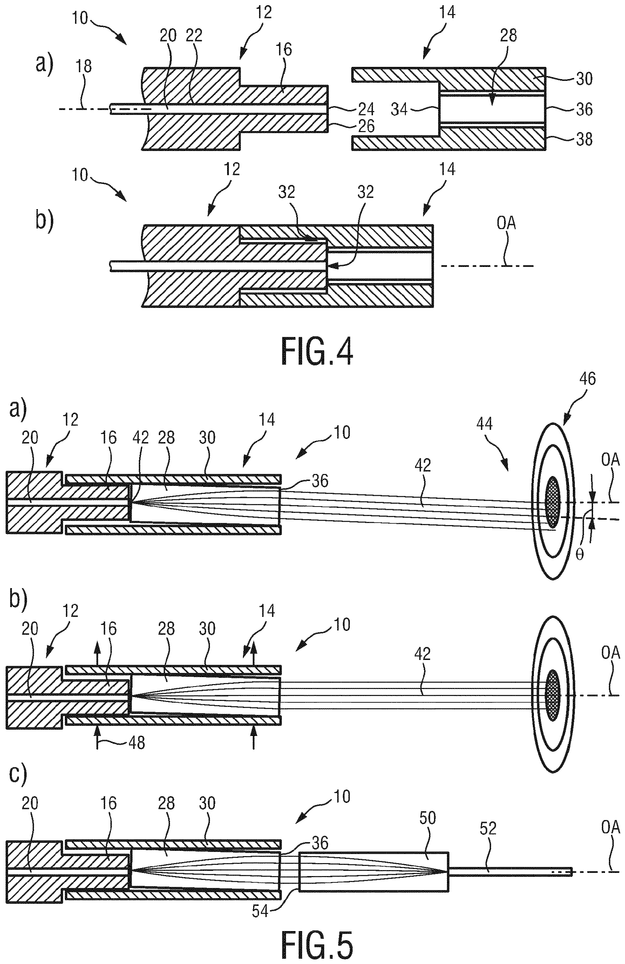

Fig. 4a) and b) show an optical connector 10 according to the principles of the present invention. Fig. 4a) shows the connector 10 in a non-final state, and 4b) shows the optical connector 10 in the final state. The optical connector 10 comprises a fiber part 12 and a lens part 14. The fiber part 12 has a fiber ferrule 16 having a longitudinal axis 18 which also may be the longitudinal center axis of the ferrule 16. Along the longitudinal axis 18, an optical fiber 20 extends through a lumen 22 in the ferrule 16. The optical fiber 20 has an optical fiber end 24 which may be flush with an end 26 of the fiber ferrule 16.

The lens part 14 has a GRIN lens 28 which is placed in a lens holder 30.

In the final configuration of the optical connector 10 as shown in Fig. 4b), the fiber part 12 and the lens part 14 are connected and joined to one another in that the lens holder 30 is connected and joined with the fiber ferrule 16 by means of joining material 32 which may also be present between a first end facet 34 of the GRIN lens 28 and the optical fiber end 24. As will be described later, the joining substance 32 may be a refractive index-matching adhesive or glue, for example.

In the embodiment shown in Fig. 4, the lens holder 30 and the fiber ferrule 16 are configured in form of a plug (fiber ferrule 16) and socket (lens holder 30) arrangement. Other configurations are also possible. Independent of the specific configuration of the connecting structures of the lens holder 30 and the fiber ferrule 16, the design of the lens holder 30 and the fiber ferrule 16 should be such that after connecting the lens holder 30 with the fiber ferrule 16 and before the lens holder 30 and the fiber ferrule are fixedly joint, the lens holder 30 and the fiber ferrule 60 should be adjustable in position and/or orientation with respect to one another in order to obtain the proper position and/or orientation of the GRIN lens 28 with respect to the optical fiber 20, as will be described later, in order to avoid any misalignments as described before with reference to Fig. 3.

A method according to a first embodiment of making the optical connector 10 can be principally as follows:

In a mass production of optical connectors 10, a plurality of GRIN lenses 28 may be cut or machined, in particular polished in one batch to the desired length L (see above). To this end, a plurality of GRIN lenses 28 may be stacked in a hexagonal pattern and glued together, and later, after processing the lenses 28 to the desired length L, the glue will be dissolved and the resulting GRIN lenses 28 be cleaned for further processing. In a next step, the so-manufactured GRIN lenses 28 may be placed into a respective lens holder 30, wherein a second end facet 36 of the GRIN lens 28 may be flush to an end face 38 of the lens holder 30. In this stage of the procedure, the GRIN lens 28 may be joined to the lens holder 30 by a joining substance like a glue, but it is also possible that the final fixation of the GRIN lens 28 to the holder 30 is accomplished in a later step.

It is further advantageous to have a quality of the end face 26 or at least of the optical fiber end 24 which meets the UPC standard (optical fiber Ultra-Polished Connector). To this end, at least the optical fiber end 24 may be slightly spherically convexly curved with the apex of the curvature at the center of the optical fiber 20. Thus, the contact point between the lens 28 and the optical fiber 20 is close to the center of both the lens 28 and the optical fiber 20, and not close to an edge of the lens 28, not even when the lens 28 is slightly tilted.

As already mentioned, the lens holder 30 and the fiber ferrule 16 are preferably configured such that they allow an adjustment of the position and/or orientation of the lens holder 30 and the fiber ferrule 60 with respect to one another before they are fixed to one another. In case of the GRIN lens being a k/4 pitch GRIN lens, the aim is to get a collimated beam from all cores of the optical fiber 20 (as described with respect to optical fiber F1 in Fig. 1) at the output end facet 36 of the GRIN lens 28, and where the central beam (of the central fiber core C12 in Fig. 1) is aligned with the optical axis OA and the longitudinal symmetry axis 18 of the optical connector 10. The method according to the invention allows for correction for at least some, preferably all deviations summarized above with reference to Fig. 3.

An adjustment procedure for adjusting the position and/or the orientation of the lens holder 30 with respect to the fiber ferrule 16 will be described hereafter with respect to Fig. 5.

Fig. 5a) to c) illustrate how the position and/or orientation of the lens holder 30 and the fiber ferrule 16 with respect to one another may be adjusted in order to obtain a proper alignment of the GRIN lens 28 with respect to the optical fiber 20.

Fig. 5a) shows an example, where the GRIN lens 28 is erroneously mounted under an angle inside the lens holder 30. If the GRIN lens 28 would be fixedly joint to the lens holder 30 and the lens holder 30 to the fiber ferrule 16 in the situation as shown in Fig. 5a) light coming from the optical fiber 20 would exit the GRIN lens 28 under an angle $\theta$ with respect to the optical axis OA which is $\neq 0°$ which is undesired. Thus, adjustment is required.

Adjustment is performed under feedback control of a light beam 42 propagating through the optical fiber 20 and the GRIN lens 28. An optical detection system 44 having an optical axis OA which is aligned with the symmetry axis of the optical connector 10 captures the light beam 42 exiting from the GRIN lens 28 in a distance from the output end facet 36 of the GRIN lens 28. The optical detection system 44 may comprise a target or detector, e.g. a screen, a camera, quadrant detector or other combinations of optics and photodetectors.

By moving the lens holder 30 which also moves the GRIN lens 28, slightly relative to the fiber ferrule 16, as indicated by arrows 48, it is possible to correct for the misplaced GRIN lens 28 until the light beam 42 exits the GRIN lens 28 under the correct angle $\theta$, namely aligned with the optical axis OA, as shown in Fig. 5b). In this position, the lens holder 30 can be fixedly joined to the fiber ferrule 16 by a joining substance.

In the example described before, one misalignment is compensated by another misalignment, i.e. a misalignment as shown in Fig. 3a) is compensated for by an intended misalignment according to Fig. 3d). This type of compensation works properly when small misalignments occur, as will typically be the case.

When the optical connector 10 is connected to another GRIN lens 50 plus optical fiber 52, there will be a good optical connection despite the improper orientation of the GRIN lens 28 in the holder 30, as shown in Fig. 5c).

However, in this embodiment, the tilt of the output end facet 36 of the GRIN lens 28 may be disadvantageous, because when connecting the optical connector 10 with a counter connector having the GRIN lens 50, there may be a remaining air gap between the output end facet 36 and an input end facet 54 of the GRIN lens 50 when the GRIN 28 and the GRIN lens 50 are pushed against one another, even if there is an elastic index-matching foil IM as shown in Fig. 1 between them. Thus, a lens-to-air refraction in the case of a tilted output end facet 36 should be eliminated before the adjustment step as described before is performed. This means that the output end facet 36 of the GRIN lens 28 should be rotated or tilted or otherwise processed so that it is at right angles to the optical axis OA during the adjustment procedure.

Thus, an adjustment of the output end facet 36 of the GRIN lens 28 would be advantageous.

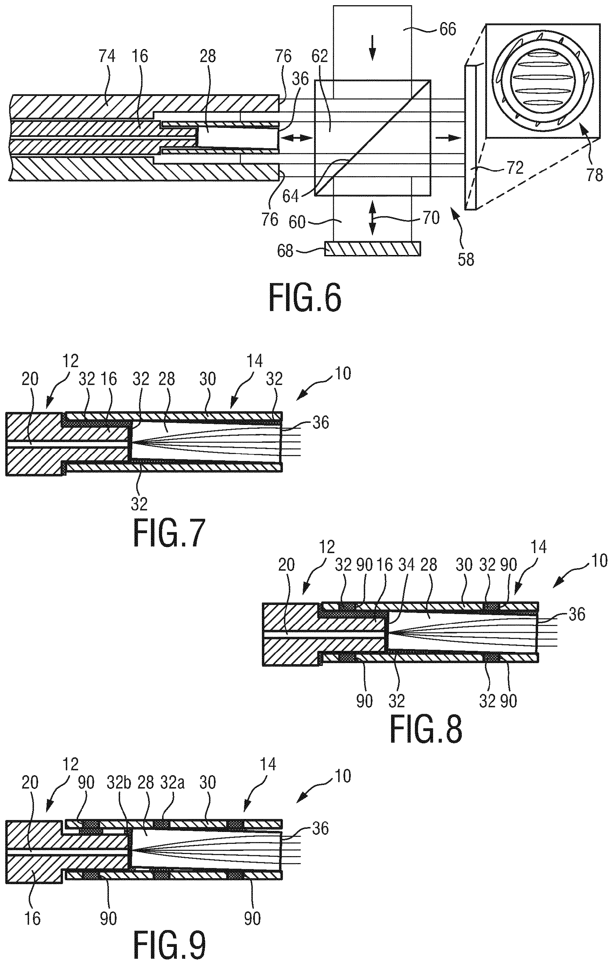

Fig. 6 shows an embodiment of an adjustment of the output end facet 36 with optical feedback control using an interferometer 58. The interferometer 58 has a reference interferometer arm 60 and a measuring arm 62 and a beam splitter 64. A measuring light beam 66 of coherent light is partially reflected by the beam splitter 64 onto the output end facet 36 and partially transmitted into the reference arm 60 where a reflector 68 receives and reflects light according to a double arrow 70. The reflector 68 may also be movable in direction of the double arrow 70. Part of the measuring light beam 66 which is directed onto the output end facet 36 is reflected therefrom, passes through the beam splitter 64 and is superimposed to the light coming from the reference arm 60, wherein the superimposed interference light is captured by a detector 72. The lens 28 is moved, for example tilted or rotated, in the holder 30 until the end facet 36 is at right angles to the symmetry axis or optical axis of the connector 10, which is controlled interferometrically with the interferometer 58. It is also possible to adjust the orientation and/or the position of the fiber ferrule 16 by means of the interferometer 58. To this end, the fiber ferrule 60 may be mounted in a fiber ferrule holder 74 that has reflecting features perpendicular to the orientation of the fiber ferrule 16, for example on a front face 76 of the fiber ferrule holder 74.

On a detector 78 of the interferometer 58, two interferograms are visible, one from the output end facet 36 of the GRIN lens 28, and one from the holder 74 of the fiber ferrule 16.

The wavelength used for the interferometer 58 should be different from the wavelength used for alignment of the lens holder 30 with respect to the fiber ferrule 16 as described with reference to Fig. 5a) to c). In the latter case, the wavelength used is, for example, the wavelength typically used for optical shape sensing, for example 1545 nm, and this wavelength should correspond to a wavelength at which the optical fiber is single-mode. For the interferometer 58, it is advantageous to use a visible wavelength or at least one that can be detected by a standard video camera or silicon quadrant detector as the detector 78.

Other ways for adjusting the output end facet 36 of the GRIN lens 28 can be to put a thin layer of material onto the output end facet 36 and polish the layer to be at right angles to the optical axis OA or the symmetry axis of the connector 10. This step might be useful to make sure that the output end facet 36 and the end surface 38 of the lens holder 30 have a common smooth surface.

Another way is to use an index-matching, elastic foil on a glass window, the glass being at right angles to the optical axis OA or the symmetry axis of the connector 10. The lens part 14 may be pressed against the foil to eliminate refraction. The refractive index of the glass window is of little importance.

A further adjustment may be related to the distance of the first end facet 34 of the GRIN lens 28 and the optical fiber end 24 of the optical fiber 20 (see Figs. 4 and 5). Such an adjustment serves to provide the correct focus position and magnification of the GRIN lens 28. Such an adjustment may be advisable if the GRIN lens 28 has not been made exactly to the desired length L and, thus, the correct pitch P. For example, small adjustments may be made if the length L of the GRIN lens 28 is slightly too short. The focus can be adjusted at the cost of magnification, or vice versa. In any case, small adjustments can be made by positioning and joining the GRIN lens 28 and the optical fiber end 24 not flushed together, but with a small, few microns space therebetween for final adjustment of focus or magnification.

In the method of making the optical connector 10, for example the optical connector 10 in Fig. 4, the lens holder 30 may be filled, before the GRIN lens 28 is inserted into the lens holder 30, with a slight excess of joining substance 32, assuring a fully filled cavity after insertion of the GRIN lens 28, as shown in Fig. 7. Any expelled excess of joining substance may be then wiped off. As the joining substance, a two-component adhesive may be used which has a limited pot life, i.e. application time after mixing, but long enough to allow for the optical adjustment as described above with reference to Figs. 5 and/or 6. Since the joining substance 32 also fills the space between the end face 26 and optical fiber end 24 of the fiber part 12 and the first end face 34 of the GRIN lens 28, the refractive index of the cured joining substance 32 should be sufficiently matched to that of the optical fiber 20 and the GRIN lens 28. Here, sufficiently matched means that the reflection from the interfaces between the GRIN lens 28 and the joining substance 32 as well as that between the optical fiber 20 and the joining substance 32 are low enough to not disturb the optical signal from the sensor in the optical fiber 20.

Fig. 8 shows another embodiment, wherein a dual curable adhesive is used as the joining substance. In this embodiment, the lens holder 30 has holes 90 at its circumference at suitable locations. The dual curable adhesive may be an adhesive which can be cured by means of two different energy sources, for example ultraviolet (UV) light on the one hand and heat on the other hand. The adhesive 32 may be applied in excess into the lens holder 30 before inserting the GRIN lens 28, or the adhesive can be applied through one or more of the holes 90 after the GRIN lens 28 has been placed in the lens holder 30. The holes 90 may also be used to push and hold the lens into the correct position. After optical adjustment as described above with reference to Figs. 5 and/or 6, the adhesive 32 is locally cured by UV light via the holes 90. This provides sufficient fixation allowing the optical connector 10 to be taken out of the alignment tool. In the next step, the adhesive 32 may be fully cured by heating the optical connector 10 to the required temperature. The refractive index of the cured adhesive 32 again should be matched to that of the optical fiber 20 and the GRIN lens 28.

Another embodiment is shown in Fig. 9, where the joining substance is a combination of an adhesive 32a and an optically matched, non-volatile gel, wherein the latter is placed between the GRIN lens 28 and the optical fiber end 24 of the optical fiber 20. The adhesive, for example an UV curable adhesive is filled in through the holes 90 after the alignment procedure described above, while the index-matching gel is placed between the GRIN lens 28 and the optical fiber 20 when the lens holder 30 and the fiber ferrule 16 are put together for the alignment procedure.

The adhesive 32a may also be a fast curing two-component adhesive instead of a UV curable adhesive.

An advantage of the method according to Fig. 9 is that strength, wetting and bonding properties of the adhesive 32a, necessary to hold the GRIN lens 28 in place, are decoupled from the transparency and index-matching properties of the gel, which in turn does not need to have much strength.

In case of UV light curable adhesives, the UV light may be applied by focusing it at the second end facet 36 of the GRIN lens 28 so that it forms an approximate parallel beam at the input end facet 34 of the GRIN lens 28, where the adhesive is applied. In this way, only a minimum of light will enter the fiber cores of the optical fiber 20 which may contain fiber Bragg gratings that are sensitive to UV light.

A general problem with gluing processes is shrinkage of the adhesive during the curing process. In the present case, there is a risk that the optical alignment between the GRIN lens 28 and the optical fiber 20 may suffer after the adhesive is cured. This risk is the more since for the present joining process an adhesive used must be strong, and hence, the shrinking forces are not negligible.

In order to work against displacement of the lens part 14 and the fiber part 12 due to shrinkage of the adhesive, some further measures may be taken. One way may be a controlled mechanical deformation of the lens part 14 and the fiber part 12. The lens holder 30 and/or the fiber ferrule 16 may be made of ceramics or stainless steel, for example hardened stainless steel, and may have holes that are filled with a deformable material, such as a metal, that will keep the deformation and clamp the parts 14 and 12 together. The deformation is made to keep the parts 12 and 14 in place during and after gluing them together.

The holes may take the shape of slits, and the lens part 14 may be deformable, be bent or displaced off-center to adjust the position of the GRIN lens 28 with respect to the fiber part 12.

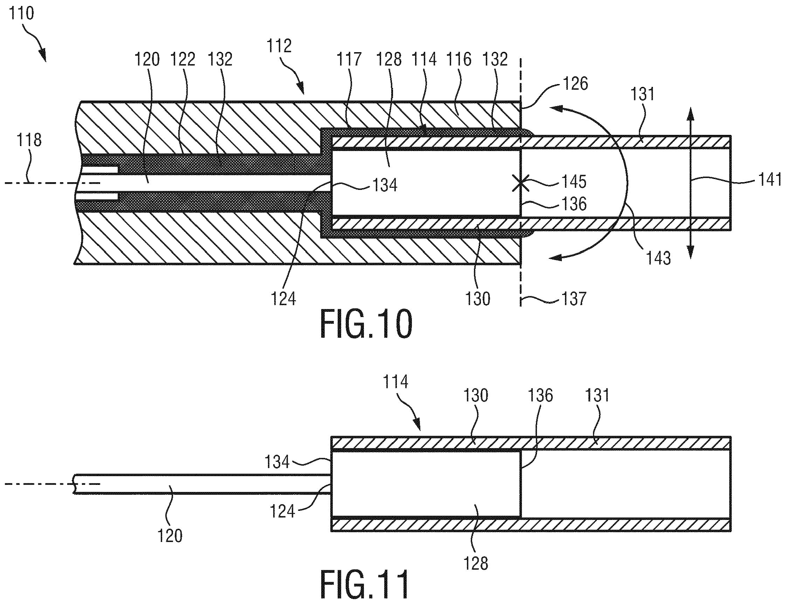

With reference to Figs. 10 and 11, a further embodiment of an optical connector 110 and a method of making same will be described. In Figs. 10 and 11, parts of the optical connector 110 which are identical or similar or comparable with parts of the optical connector 10 are denoted by the same reference numerals increased by 100. In the following, mainly the differences between the optical connector 110 and the optical connector 10 are described. If not described to the contrary, the description of the optical connector 10 and of the method making same may apply for the optical connector 110.

Fig. 10 shows the optical connector 110 which is made according to the principles of the present invention. The optical connector 110 comprises a fiber part 112 and a lens part 114. The fiber part 112 has a fiber ferrule 116 having a longitudinal axis 118 which also may be a longitudinal center axis of the ferrule 116. Along the longitudinal axis 118, an optical fiber 120 extends through a lumen 122 in the fiber ferrule 116. The optical fiber 120 has an optical fiber end 124.

The lens part 114 has a GRIN lens 128 which is placed in a lens holder 130.

Differently from the previous embodiment, the optical fiber 120 and the GRIN lens 128 are fusion-spliced to one another, i.e. the optical fiber end 124 is fusion-spliced to a first end facet 134 of the GRIN lens 128.

As shown in Fig. 10, the GRIN lens 128 placed in the lens holder 130 is fully inserted in the fiber ferrule 116 which has a cavity 117 for accommodating the GRIN lens 128 and the lens holder 130. The lens holder 130 is shown with an excess length 131, which is cut off along a line 137 in a later step of the method of making the optical connector so that, in the final optical connector 110, the lens holder 130 and the second end facet 136 of the GRIN lens 128 are flush with an end 126 of the fiber ferrule 116.

The lens holder 130 is joined to the fiber ferrule 116 by a joining substance 132. In addition, the optical fiber 120 is joined to the fiber ferrule 116 by the joining substance 132. It is to be noted that the optical fiber 120 may be joined to the fiber ferrule 116 by a joining substance which is different from the joining substance joining the lens holder 130 to the fiber ferrule 116. The fiber ferrule 116 may be configured with lateral openings (not shown) comparable with the openings 90 in Fig. 8 or 9 so that the joining substance may be filled in through these lateral openings. As to examples of the type of the joining substance 132, reference is made to the description of the optical connector 10.

With reference to Fig. 10 and 11, a method of making the optical connector 110 will be described next. First, the GRIN lens 128, the optical fiber 120 and the fiber ferrule 116 and the lens holder 130 are provided. The GRIN lens 128 is not provided with its predetermined final length, but initially a long GRIN lens rod is provided. This long GRIN lens rod is fusion-spliced onto the optical fiber end 124. Subsequently, the long GRIN lens rod is cut to the final predetermined length of the GRIN lens 128, for example by cleaving in an optical fiber cleaver (not shown).

After the GRIN lens 128 is cut to length, the GRIN lens 128 is inserted into the lens holder 130. The lens holder 130 may be a tube made of a shrinkable material, such as PET (typical wall thickness may be on the order of 0.01 mm), that is shrunk around the GRIN lens 128 so as to form the lens holder 130. The material of the lens holder 130 may be transparent. Further, in order to facilitate inserting the GRIN lens 128 into the shrinkable tube, the tube may be pressurized by gas in order to become stiffer for easier handling or filled by an index matching material. As shown in Fig. 11, the tube forming the lens holder 130 may be provided with an excess length 131 which may facilitate handling of the GRIN lens/lens holder arrangement, in particular in the subsequent steps.

Next, the optical fiber 120 together with the GRIN lens 128 and the lens holder 130 is inserted into the fiber ferrule 116 by sliding the fiber ferrule 116 over the optical fiber 120 towards the GRIN lens 128 which, together with the lens holder 130 is put inside the end 126 of the fiber ferrule 116. Thus, the lens holder 130 and the fiber ferrule 116 including the GRIN lens 128 and the optical fiber 120 are put together in this step.

In this stage, the joining substance 132 may be filled in the fiber ferrule 116, or the joining substance 132 may be filled in the fiber ferrule 116 before inserting the optical fiber 120 and the GRIN lens 128 into the fiber ferrule 116. It is also possible to apply the joining substance 132 in a later stage of the method.

Next, the position and/or orientation of the lens holder 130 and thus the GRIN lens 128 and the fiber ferrule 116 are adjusted with respect to one another as described above with reference to Fig. 5, i.e. under feedback control using the light beam 42 propagating through the optical fiber 120 and the GRIN lens 128 and directed into the optical detecting system 44. Adjustment is performed such that the light beam 42 exiting the GRIN lens 128 is aligned with the longitudinal symmetry axis of the optical connector 110 to correct for all beam deflection errors.

Adjustment of the position of the lens holder 130 and thus the GRIN lens 128 may be performed by displacing the lens holder 130 and thus the GRIN lens 128 in direction transverse to the longitudinal axis 118 as indicated by an arrow 141, and adjustment of the orientation of the lens holder 130 and thus the GRIN lens 128 may be performed by tilting or rotating the lens holder 130 as indicated by an arrow 143. Tilting or rotating may be performed about an axis or about a point, e.g. a point 145 as shown in Fig. 10.

If the adjustment procedure requires that the output end facet 136 is not oriented at right angles with respect to the optical axis after the adjustment procedure, such improper orientation can be compensated for in the adjustment procedure. For example, the tilt angle of the output end facet 136 of the GRIN lens 128 can be measured, and the GRIN lens 128 can be oriented, i.e. tilted in the adjustment procedure at such an angle that when the refractive index of the GRIN lens 128 would be matched with the refractive index of the output medium, i.e. the medium into which the light beam enters when exiting the GRIN lens 128, beam deflection is zero. In other words, the tilt angle of the output facet of the GRIN lens can be mathematically compensated for in the adjustment procedure. The output medium can be a foil which is placed in use of the connector 110 between the connector 110 and a counter-connector.

Another possibility is to arrange an index-matching material onto the second end facet 136 in order to exclude refraction at the inclined output end facet 136 of the GRIN lens 128. The index-matching material may be supported by one or more windows along the optical axis. The index-matching material may be an immersion liquid in a volume with an index-matched optical window along the optical axis, or an elastic foil or gel on such a window, or an elastic foil or gel coupling light into a large core optical fiber (of the same refractive index) which is essentially aligned along the optical axis. The shrink tube forming the lens holder 130 may contain this optical fiber configuration as the lever by which the lens 128 is manipulated, the shrink tube being the mechanically connecting part, and a gel or foil may be the optically connecting part.

After aligning of the lens holder 130 and curing of the joining substance 132, the excess length 131 of the tube forming the lens holder 130 is cut off and the lever is cleaned. A final short finishing step of polishing may be additionally applied to get rid of any sharp edges at the connector end 126. It may be additionally advantageous to also polish the connector end properly so that the second end facet 136 is at right angles so that it can also be used in a free space connection.

The optical connector 10 and 110 may be advantageously used in optical shape sensing technologies, in particular with backloadable interventional devices for cardiovascular interventions or any other minimally invasive procedures.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

Any reference signs in the claims should not be construed as limiting the scope of the claims.

**Claims**

1. Method of making an optical connector, comprising:

   providing a fiber ferrule (16;116) having a longitudinal axis (18;118), and an optical fiber (20;120) having an optical fiber end (24;124),
   providing a graded index (GRIN) lens (28;128) having a first end facet (34;134),
   providing a lens holder (30; 130),
   inserting the GRIN lens (28;128) into the lens holder (30;130),
   inserting the optical fiber (20;120) into the fiber ferrule (16;116),
   putting the lens holder (30;130) and the fiber ferrule (16;116) together and
   adjusting at least one of a position and an orientation of the lens holder (30;130) and the fiber ferrule (16;116) with respect to one another, while the first end facet (34;134) of the GRIN lens (28;128) is in optical communication with the optical fiber end (24;124), under feedback control using a light beam (42) propagating through the optical fiber (20;120) and the GRIN lens (28;128) and directed into an optical detection system (44), such that the light beam (42) exiting the GRIN lens (28;128) is aligned with a longitudinal symmetry axis (OA) of the optical connector (10;110),
   joining the lens holder (30;130) to the fiber ferrule (16;116).

2. Method according to claim 1, further comprising, prior to inserting the GRIN lens (128) into the lens holder (130) and prior to inserting the optical fiber (120) into the fiber ferrule (116), joining the optical fiber end (124) to the first end facet (134) of the GRIN lens (128).

3. Method according to claim 2, wherein joining the optical fiber end (124) to the first end facet (134) comprises fusion-splicing the optical fiber end (124) with the first end facet (134).

4. Method according to claim 1, wherein the optical fiber end (24) and the first end facet (34) are joined to one another when joining the lens holder (30) to the fiber ferrule (16).

5. Method according to claim 1, wherein the lens holder (130) is configured to clamp the GRIN lens (128).

6. Method according to claim 5, wherein the lens holder (130) is a shrinkable tube.

7. Method according to claim 1, wherein providing the GRIN lens comprises providing a GRIN lens rod having a length corresponding to the length of a plurality of GRIN lenses, wherein the GRIN lens is cut from the GRIN lens rod to obtain the GRIN lens with a predetermined pitch length.

8. Method according to claim 1, wherein providing the GRIN lens comprises providing a GRIN lens rod having a length corresponding to the length of a plurality of GRIN lenses, wherein the GRIN lens is cut from the GRIN lens rod to obtain the GRIN lens with a predetermined pitch length after fusion-splicing of the optical fiber to the GRIN lens rod.

9. Method according to claim 1, wherein adjusting at least one of a position and an orientation of the lens holder (30;130) and the fiber ferrule (16;116) with respect to one another is performed during joining the lens holder (30;130) to the fiber ferrule (16;116).

10. Method according to claim 1, wherein joining the lens holder (30;130) to the fiber ferrule (16;116) is performed with a joining substance (32) that is one or a combination of a two-component adhesive, a dual curable adhesive, an index-matching gel, a hot melt adhesive, a thermoplastic material.

11. Method according to claim 10, wherein the joining substance (32) is filled into the lens holder (30) and/or the fiber ferrule (116) before or after adjusting at least one of a position and orientation of the lens holder (30;130) and the fiber ferrule (16;116) with respect to one another.

12. Method according to claim 1, further comprising adjusting a second end facet (36;136) of the GRIN lens (28;128) opposite the first end facet (34;134) to be at right angles to the symmetry axis (OA).

13. Method according to claim 1, further comprising arranging an index-matching element in contact with the second end facet (36; 136) which is configured to prevent refraction of the light beam (42) when exiting the second end facet (36;136) during the adjustment of the at least one of position and orientation of the lens holder (30;130) and the fiber ferrule (16;116) with respect to one another.

14. Optical connector, comprising:

a fiber part (12;112) having a fiber ferrule (16;116) having a longitudinal axis (18;118), and an optical fiber (20;120) placed inside the fiber ferrule (16;116) and extending along the longitudinal axis (18;118), wherein the optical fiber (20;120) has an optical fiber end (24;124),
a lens part (14;114) having a lens holder (30;130) and a graded index (GRIN) lens (28;128) placed inside the lens holder (30;130),
the lens holder (30;130) being connected to the fiber ferrule (16;116), wherein the GRIN lens (28;128) is in optical communication with the optical fiber end (24;124), wherein the GRIN lens (28;128) is joined to the lens holder (30;130), and the lens holder (30;130) is joined to the fiber ferrule (16;116),
wherein at least one of a position and orientation of the lens holder (30;130) and the fiber ferrule (16;116) is adapted such that a light beam propagating from the optical fiber end (24;124) through the GRIN lens (28;128) is aligned with a longitudinal symmetry axis (OA) of the optical connector (10;110) at an output end facet (36;136) of the GRIN lens (28;128) when exiting from the GRIN lens (28;128).

15. Optical connector of claim 14, wherein the lens holder (130) is a shrink tube shrunk on the GRIN lens (128).

FIG.1

FIG.2

FIG.3

FIG.4

FIG.5

FIG.6

FIG.7

FIG.8

FIG.9

FIG.10

FIG.11

EP 3 508 899 A1

Europäisches
Patentamt

European
Patent Office

Office européen
des brevets

# EUROPEAN SEARCH REPORT

Application Number

EP 18 15 0460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 01/11403 A1 (CORNING INC [US])<br>15 February 2001 (2001-02-15)<br>* abstract *<br>* page 10, lines 11-15; claims 1,7,8;<br>figures 1,2 *<br>* page 7, line 29 - page 8, line 1 *<br>* page 12, lines 3-12 * | 1-15 | INV.<br>G02B6/38<br>G02B6/32<br>G02B6/42<br><br>ADD.<br>G02B6/293 |
| A | US 6 113 282 A (MAO ZHONG MING [US] ET AL)<br>5 September 2000 (2000-09-05)<br>* claim 5 * | 6,15 | |
| A | EP 0 348 117 A2 (SEZERMAN OMUR M)<br>27 December 1989 (1989-12-27)<br>* column 2, lines 16-18 * | 13 | |

TECHNICAL FIELDS
SEARCHED        (IPC)

G02B

The present search report has been drawn up for all claims

| Place of search | Date of completion of the search | Examiner |
|---|---|---|
| The Hague | 19 June 2018 | Kapsalis, Alexandros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 15 0460

This annex lists the patent family members relating to the patent documents cited in the above-mentioned European search report.
The members are as contained in the European Patent Office EDP file on
The European Patent Office is in no way liable for these particulars which are merely given for the purpose of information.

19-06-2018

| Patent document cited in search report | | Publication date | Patent family member(s) | | Publication date |
|---|---|---|---|---|---|
| WO 0111403 | A1 | 15-02-2001 | AU<br>TW<br>US<br>WO | 1568401 A<br>500935 B<br>6168319 B1<br>0111403 A1 | 05-03-2001<br>01-09-2002<br>02-01-2001<br>15-02-2001 |
| US 6113282 | A | 05-09-2000 | CN<br>TW<br>US | 1221121 A<br>442676 B<br>6113282 A | 30-06-1999<br>23-06-2001<br>05-09-2000 |
| EP 0348117 | A2 | 27-12-1989 | AU<br>AU<br>CA<br>DE<br>DE<br>EP<br>JP<br>JP | 621380 B2<br>643353 B2<br>1325122 C<br>68922789 D1<br>68922789 T2<br>0348117 A2<br>2824489 B2<br>H02110410 A | 12-03-1992<br>11-11-1993<br>14-12-1993<br>29-06-1995<br>02-11-1995<br>27-12-1989<br>11-11-1998<br>23-04-1990 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016193051 A1